# EUROPÄISCHE PATENTSCHRIFT

(11) **EP 3 144 170 B1**
(45) Veröffentlichungstag und Bekanntmachung des Hinweises auf die Patenterteilung: **13.06.2018**
(21) Anmeldenummer: 16001830.5
(22) Anmeldetag: 19.08.2016
(51) Int. Cl.: B60K 15/073, B60K 15/067, B60K 13/04

(54) **FAHRGESTELL FÜR EIN NUTZFAHRZEUG MIT SEITLICHEM TANK**
CHASSIS FOR AN UTILITY VEHICLE WITH SIDE TANK
CHASSIS DE VEHICULE UTILITAIRE COMPRENANT UN RESERVOIR LATERAL

(30) Priorität: 17.09.2015 AT 6112015
(43) Veröffentlichungstag der Anmeldung: 22.03.2017
(73) Patentinhaber: MAN Truck & Bus Österreich GesmbH, 4400 Steyr (AT)
(72) Erfinder: Kalkgruber, Franz, 4400 Steyr (AT); Kern, Karl, 4400 Steyr (AT)
(74) Vertreter: v. Bezold & Partner Patentanwälte - PartG mbB

(56) Entgegenhaltungen:
- EP-A2- 2 684 775
- WO-A1-2007/069987
- AT-B1- 508 553
- CN-U- 204 161 101
- DE-A1-102009 030 583
- DE-A1-102012 013 762
- DE-A1-102012 022 945
- JP-B1- 3 142 275

## Beschreibung

Die Erfindung betrifft ein Fahrgestell für ein Nutzfahrzeug. Das Fahrgestell umfasst zumindest einen Längsträger, der einen sich schräg nach seitlich außen erstreckenden Teilbereich aufweist, und einen Tank zur Kraftstoff- oder Reduktionsmittelaufnahme.

Lastkraftwagen sind im Allgemeinen mit einem Kraftstofftank ausgestattet, um einen Kraftstoff zum Betrieb einer Verbrennungskraftmaschine mitführen zu können. Bei Lastkraftwagen ist der Kraftstofftank üblicherweise seitlich außen am Fahrgestell angeordnet, meist im Bauraum zwischen einem vorderen Radkasten und einem hinteren Radkasten. Der Bauraum zwischen dem vorderen Radkasten und dem hinteren Radkasten ist meist durch andere Fahrzeugkomponenten und die Radkästen selbst teilweise belegt und somit begrenzt und/oder zerstückelt. Mit der Einführung der Euro-6-Norm und dem damit verbundenen vergrößerten Abgasschalldämpfer wird der seitlich außen am Fahrgestell zur Verfügung stehende Bauraum zusätzlich verkleinert.

Aus dem Dokument CN 204 16 11 01 U ist ein gattungsbildendes Fahrgestellt bekannt.

Eine Aufgabe der Erfindung ist es, eine Möglichkeit zu schaffen, das Tankvolumen eines seitlich außen an einem Fahrgestell angeordneten Tanks trotz beengten und/oder ungünstigen Bauraumverhältnissen zu optimieren.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung betrifft ein Fahrgestell (z. B. Chassis, Rahmenstruktur, etc.) für ein Nutzfahrzeug, insbesondere einen Lastkraftwagen, z. B. eine Sattelzugmaschine, oder einen Omnibus, gemäß Anspruch 1.

Das Fahrgestell umfasst zumindest einen Längsträger, der einen sich schräg nach seitlich außen erstreckenden Teilbereich aufweist. Das Fahrgestell ist mit einem Tank zur Kraftstoff-oder Reduktionsmittelaufnahme versehen. Der Tank kann z. B. ein Dieseltank oder ein Tank zur Aufnahme einer Harnstoff-Wasser-Lösung sein.

Der Tank umfasst eine Seitenwand mit schrägem Seitenwandbereich, der sich zweckmäßig benachbart und/oder im Wesentlichen parallel entlang des schrägen Teilbereichs des Längsträgers erstreckt, so dass vorzugsweise die Tankkontur an die Längsträgergeometrie, insbesondere den Längsträgerverlauf, anpassbar ist. Die Seitenwand des Tanks ist insbesondere dem Längsträger zugewandt.

Dadurch, dass die Tankkontur, insbesondere die Seitenwandkontur, an die Längsträgergeometrie und/oder den Bauraum angepasst ist, kann das Tankvolumen optimiert werden.

Der Tank erstreckt sich seitlich einwärts unter den Längsträger in Richtung der Mitte des Fahrgestells.

Der Tank kann sich z. B. so weit zu einer Nutzfahrzeug-Gelenkwelle erstrecken, dass er weniger als 15cm, weniger als 10cm oder weniger als 5cm von der Nutzfahrzeug-Gelenkwelle beabstandet ist. Vorteilhaft bei dieser Ausführungsvariante ist die optimierte Raumausnutzung von Freiräumen im unteren Bereich des Fahrgestells. Durch die Schaffung eines um die Gelenkwelle ausgebildeten optionalen Freiraums ist zudem eine Wartung und/oder Inspektion der Nutzfahrzeug-Gelenkwelle von einer Position unterhalb des Nutzfahrzeugs möglich, ohne dass der Tank abmontiert werden muss.

Der Tank ist zweckmäßig in Längsrichtung des Fahrgestells hinter einem vorderen Radkasten (z. B. Kotflügel, Radlauf, Radverkleidung, etc.) und/oder vor einem hinteren Radkasten (z. B. Kotflügel, Radlauf, Radverkleidung, etc.) angeordnet und weist eine vordere Frontwand und eine hintere Rückwand auf.

Die Frontwand des Tanks ist an die Form des vorderen Radkastens angepasst und erstreckt sich vorzugsweise zumindest abschnittsweise zweckmäßig benachbart und/oder im Wesentlichen parallel abschnittsweise entlang des vorderen Radkastens. Alternativ oder ergänzend ist die Rückwand des Tanks an die Form des hinteren Radkastens angepasst und erstreckt sich vorzugsweise zumindest abschnittsweise zweckmäßig benachbart und/oder im Wesentlichen parallel entlang des hinteren Radkastens.

Dadurch, dass die Tankkontur, insbesondere die Front- und/oder Rückwandkontur, an die Geometrie des vorderen Radkastens und/oder hinteren Radkastens anpassbar ist, kann das Tankvolumen vergrößert werden.

Die Form der Frontwand, der Rückwand, des vorderen Radkastens und/oder des hinteren Radkastens ist zumindest abschnittsweise gekrümmt, z. B. bogenförmig und/oder kreisbogenförmig.

Der Radkasten kann z. B. abschnittsweise konvex ausgeformt sein, so dass die Frontwand und/oder die Rückwand dementsprechend konkav ausgeformt sein können.

Die Seitenwand des Tanks kann, zusätzlich zu dem schrägen Seitenwandbereich, zumindest einen sich im Wesentlichen parallel zur Längsrichtung des Fahrgestells erstreckenden Teilbereich aufweisen, vorzugsweise einen in Längsrichtung des Fahrgestells vor dem schrägen Seitenwandbereich angeordneten Teilbereich und/oder einen in Längsrichtung des Fahrgestells hinter dem schrägen Seitenwandbereich angeordneten Teilbereich.

Der Tank umfasst zweckmäßig zumindest ein Halterungselement zur Halterung des Tanks am Längsträger.

Es ist möglich, dass der Tank zumindest eine Durchgangsöffnung für das Halterungselement aufweist. Die Durchgangsöffnung wird vorzugsweise abschnittsweise über ihren gesamten Außenumfang vom Tank eingeschlossen, insbesondere ummantelt.

Es ist möglich, dass die Durchgangsöffnung den Tank im Wesentlichen vertikal durchstößt und/oder ein Halterungselement über die Durchgangsöffnung zur Unterseite des Tanks führbar ist, um den Tank an dessen Unterseite abzustützen, so dass das Halterungselement zweckmäßig als untere Auflage für den Tank dienen kann.

Das Halterungselement ist vorzugsweise im Wesentlichen L-förmig ausgebildet. Ein im Wesentlichen vertikaler Teil des Halterungselements dient zweckmäßig zur Halterung an dem Längsträger, während ein im Wesentlichen horizontaler Teil des Halterungselements zweckmäßig eine untere Auflage für den Tank schafft.

Der Tank ist vorzugsweise aus Kunststoffmaterial oder metallischem Werkstoff gefertigt.

Kunststoffmaterial ist insbesondere bei der Ausführungsform mit Konturanpassung an Radkasten und/oder Anpassung in Richtung Gelenkwelle möglich. Metallischer Werkstoff ist insbesondere bei der Ausführungsform mit schrägem Tank-Seitenwandbereich möglich.

Das Fahrgestell umfasst zweckmäßig zwei Längsträger, von denen jeder einen sich schräg nach seitlich außen erstreckenden Teilbereich aufweist, so dass vorzugsweise ein sogenannter Y-Fahrgestellrahmen realisierbar ist.

Die Erfindung ist nicht auf ein Fahrgestell beschränkt, sondern umfasst auch ein Nutzfahrzeug, insbesondere einen Lastkraftwagen, z. B. eine Sattelzugmaschine, oder einen Omnibus, mit einem Fahrgestell wie hierin offenbart.

Das Nutzfahrzeug umfasst insbesondere ein Fahrgestell mit vorzugsweise zwei Längsträgern, die jeweils einen sich schräg nach seitlich außen erstreckenden Teilbereich aufweisen, und zumindest einen Tank zur Kraftstoff- oder Reduktionsmittelaufnahme. Der Tank umfasst eine Seitenwand mit schrägem Seitenwandbereich, der sich entlang des schrägen Teilbereichs eines der Längsträger erstreckt.

Die oben beschriebenen bevorzugten Ausführungsformen und Merkmale der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung mit den beigefügten Figuren.
- Figur 1: zeigt eine Draufsicht auf einen Teilbereich eines Fahrgestells gemäß einer Ausführungsform der Erfindung;
- Figur 2: zeigt eine Seitenansicht des Fahrgestells der Figur 1, und
- Figur 3: zeigt eine stark schematische perspektivische Ansicht eines Teilbereichs des Fahrgestells der Figuren 1 und 2.

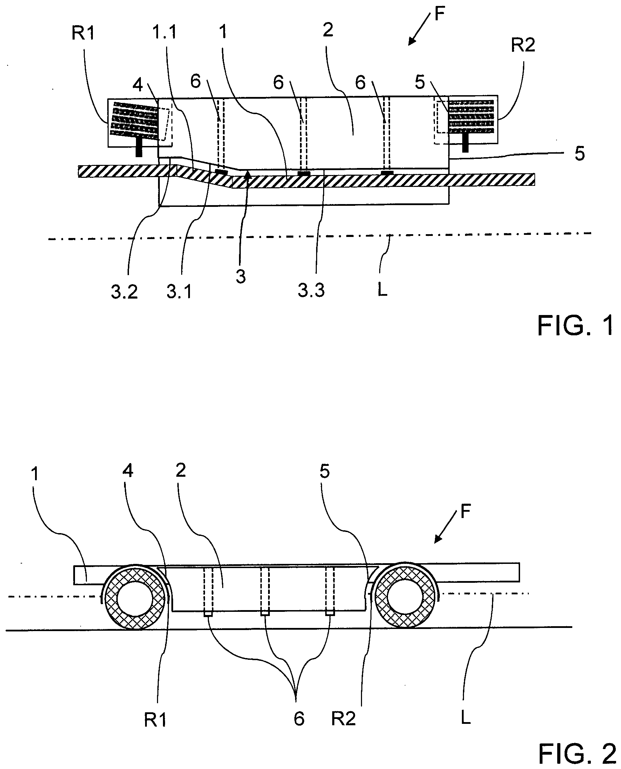

Figur 1 zeigt eine Draufsicht auf einen Teilbereich eines Fahrgestells F für ein Nutzfahrzeug gemäß einer Ausführungsform der Erfindung. Figur 2 zeigt eine zugehörige Seitenansicht des Fahrgestells F. Das Fahrgestell F wird nachfolgend unter Bezugnahme auf die Figuren 1 und 2 beschrieben.

Figur 1 zeigt eine Draufsicht auf einen rechten Teilbereich des Fahrgestells F. Das Fahrgestell F umfasst einen Längsträger 1 und ist mit einem vorderen Radkasten R1 und einem hinteren Radkasten R2 versehen. Der Längsträger 1 weist einen sich schräg nach seitlich außen erstreckenden Teilbereich 1.1 auf. Das Fahrgestell F umfasst ebenfalls einen entsprechenden linken, nicht dargestellten Teilbereich. Bezugszeichen L kennzeichnet die Fahrgestell-Längsachse.

Es ist möglich, dass an einem Längsträger 1 oder beiden Längsträgern 1 ein Tank 2 angeordnet ist, vorzugsweise ein Kraftstofftank zur Aufnahme von Dieselkraftstoff.

Der Tank 2 zeichnet sich insbesondere dadurch aus, dass dessen Tankkontur an die vorhandenen Bauraumbeschränkungen, wie insbesondere den schrägen Teilbereich 1.1 und den vorderen Radkasten R1 und den hinteren Radkasten 2, angepasst ist.

So umfasst der Tank 2 eine Seitenwand 3 mit schrägem Seitenwandbereich 3.1, der an den schrägen Teilbereich 1.1 angepasst ist und der sich benachbart und im Wesentlichen parallel entlang des schrägen Teilbereichs 1.1 erstreckt.

Darüber hinaus ergibt sich insbesondere aus Figur 2, dass eine vordere, konkav gekrümmte Frontwand 4 des Tanks 2 an die Form des vorderen, konvex gekrümmten Radkastens R1 angepasst ist und sich benachbart und im Wesentlichen parallel entlang des vorderen Radkastens R1 erstreckt. Ebenfalls ist eine hintere, konkav gekrümmte Rückwand 5 des Tanks 2 an die Form des hinteren, konvex gekrümmten Radkastens R2 angepasst und erstreckt sich benachbart und im Wesentlichen parallel entlang des hinteren Radkastens R2.

Bei der in den Figuren 1 und 2 gezeigten Ausführungsform erstreckt sich der Tank 2 vom vorderen Radkasten R1 bis zum hinteren Radkasten R2, so dass der Bauraum dort dazwischen zumindest nahezu gänzlich durch den Tank 2 ausgefüllt werden kann, was im Rahmen der Erfindung allerdings nicht zwingend ist. So kann der Tank 2 ebenfalls Bauraum für eine oder mehrere andere Fahrzeugkomponenten frei lassen, z. B. für einen Abgasschalldämpfer.

Die Seitenwand 3 des Tanks 2 umfasst außerdem in Längsrichtung L vor dem schrägen Seitenwandbereich 3.1 einen sich im Wesentlichen parallel zur Längsrichtung L erstreckenden Teilbereich 3.2 und in Längsrichtung L hinter dem schrägen Seitenwandbereich 3.1 einen sich im Wesentlichen parallel zur Längsrichtung L erstreckenden Teilbereich 3.3.

Der Tank 2 erstreckt sich seitlich einwärts vorzugsweise so weit bis zu einer nicht gezeigten Nutzfahrzeug-Gelenkwelle, dass er weniger als 15cm von der Gelenkwelle beabstandet bleibt.

Der Tank 2 wird mittels im Wesentlichen L-förmig ausgebildeten Halterungselementen 6 an dem Längsträger 1 gehalten.

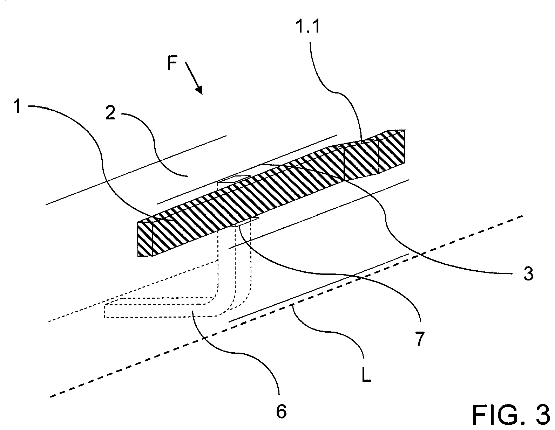

Die Halterungsmechanik zur Halterung des Tanks 2 wird unter Bezugnahme auf die schematisch dargestellte Figur 3 beschrieben.

Der Tank 2 umfasst mehrere Durchgangsöffnungen 7 für die Halterungselemente 6. Die Durchgangsöffnungen 7 durchstoßen den Tank 2 im Wesentlichen vertikal, so dass die Halterungselemente 6 zur Unterseite des Tanks 2 führbar sind, um den Tank 2 an dessen Unterseite abzustützen. Der vertikale Teil der Halterungselemente 6 dient zur Halterung am Längsträger 1, wobei der horizontale Teil der Halterungselemente 6 eine untere Auflage für den Tank 2 schafft. Die Durchgangsöffnungen 7, insbesondere deren vertikaler Teil, werden jeweils vorzugsweise abschnittsweise über ihren gesamten Außenumfang vom Tank 2 eingeschlossen, insbesondere ummantelt.

### Bezugszeichenliste

- 1: Längsträger
- 1.1: Schräger Teilbereich
- 2: Tank
- 3: Seitenwand
- 3.1: Schräger Seitenwandbereich
- 3.2: Seitenwandbereich
- 3.3: Seitenwandbereich
- 4: Frontwand
- 5: Rückwand
- 6: Halterungselement
- 7: Durchgangsöffnung
- R1: Vorderer Radkasten
- R2: Hinterer Radkasten
- L: Fahrzeuglängsachse

## Patentansprüche

1. Fahrgestell (F) für ein Nutzfahrzeug, mit zumindest einem Längsträger (1), der einen sich schräg nach seitlich außen erstreckenden Teilbereich (1.1) aufweist, und mit einem Tank (2) zur Kraftstoff- oder Reduktionsmittelaufnahme, wobei der Tank (2) eine Seitenwand (3) mit schrägem Seitenwandbereich (3.1) aufweist und der schräge Seitenwandbereich (3.1) sich entlang des schrägen Teilbereichs (1.1) des Längsträgers (1) erstreckt, **dadurch gekennzeichnet, dass** der Tank (2) hinter einem vorderen Radkasten (R1) und/oder vor einem hinteren Radkasten (R2) angeordnet ist und eine Frontwand (4) und eine Rückwand (5) aufweist, wobei die Frontwand (4) zumindest abschnittsweise gekrümmt ist und an die Form des vorderen Radkastens (R1) angepasst ist und/oder die Rückwand (5) zumindest abschnittsweise gekrümmt ist und an die Form des hinteren Radkastens (R2) angepasst ist, wobei der Tank (2) sich seitlich einwärts unter den Längsträger (1) in Richtung der Mitte des Fahrgestells (F) erstreckt.

2. Fahrgestell (F) nach Anspruch 1, **dadurch gekennzeichnet, dass** sich der Tank (2) so weit zu einer Nutzfahrzeug-Gelenkwelle erstreckt, dass er weniger als 15cm, weniger als 10cm oder weniger als 5cm von der Nutzfahrzeug-Gelenkwelle beabstandet ist.

3. Fahrgestell (F) nach einem der vorhergehenden Ansprüche, **dadurch gekennzeichnet, dass** die Frontwand (4) sich entlang des vorderen Radkastens (R1) erstreckt.

4. Fahrgestell (F) nach einem der vorhergehenden Ansprüche, **dadurch gekennzeichnet, dass** die Rückwand (5) sich entlang des hinteren Radkastens (R2) erstreckt.

5. Fahrgestell (F) nach einem der vorhergehenden Ansprüche, **dadurch gekennzeichnet, dass** die Form von zumindest einem von folgenden zumindest abschnittsweise gekrümmt ist: der vordere Radkasten (R1), der hintere Radkasten (R2).

6. Fahrgestell (F) nach einem der vorhergehenden Ansprüche, **dadurch gekennzeichnet, dass**
- die Frontwand (4) konkav ausgeformt ist, vorzugsweise um an eine konvexe Form des vorderen Radkasten (R1) angepasst zu sein, und/oder
- die Rückwand (5) konkav ausgeformt ist, vorzugsweise um an eine konvexe Form des hinteren Radkastens (R2) angepasst zu sein.

7. Fahrgestell (F) nach einem der vorhergehenden Ansprüche, **dadurch gekennzeichnet, dass** die Seitenwand (3) zumindest einen sich im Wesentlichen parallel zur Längsrichtung (L) des Fahrgestells (F) erstreckenden Teilbereich (3.2, 3.3) aufweist, vorzugsweise einen Teilbereich (3.2) in Längsrichtung (L) des Fahrgestells (F) vor und/oder einen Teilbereich (3.3) in Längsrichtung (L) des Fahrgestells (F) hinter dem schrägen Seitenwandbereich (3.1).

8. Fahrgestell (F) nach einem der vorhergehenden Ansprüche, **dadurch gekennzeichnet, dass** der Tank (2) zumindest eine Durchgangsöffnung (7) für ein Halterungselement (6) zur Halterung des Tanks (2) am Längsträger (1) aufweist.

9. Fahrgestell (F) nach Anspruch 8, **dadurch gekennzeichnet, dass** die Durchgangsöffnung (7) den Tank (2) durchstößt und/oder ein Halterungselement (6) über die Durchgangsöffnung (7) zur Unterseite des Tanks (2) führbar ist, um den Tank (2) an der Unterseite abzustützen

10. Fahrgestell (F) nach Anspruch 8 oder 9, **dadurch gekennzeichnet, dass** das Halterungselement (6) im Wesentlichen L-förmig ausgebildet ist.

11. Nutzfahrzeug, insbesondere Lastkraftwagen oder Omnibus, mit einem Fahrgestell (F) nach einem der vorhergehenden Ansprüche.

## Claims

1. Chassis (F) for a utility vehicle, having at least one longitudinal member (1), which has an obliquely laterally outwardly extending subregion (1.1), and having a tank (2) for accommodating fuel or reducing agent, wherein the tank (2) has a side wall (3) with an oblique side wall region (3.1), and the oblique side wall region (3.1) extends along the oblique subregion (1.1) of the longitudinal member (1), **characterized in that** the tank (2) is arranged behind a front wheelarch (R1) and/or in front of a rear wheelarch (R2) and has a front wall (4) and a rear wall (5), wherein the front wall (4), at least in sections, is curved and adapted to the shape of the front wheelarch (R1) and/or the rear wall (5), at least in sections, is curved and adapted to the shape of the rear wheelarch (R2), wherein the tank (2) extends laterally inwardly under the longitudinal member (1) in the direction of the centre of the chassis (F).

2. Chassis (F) according to Claim 1, **characterized in that** the tank (2) extends towards a utility vehicle propeller shaft to such an extent as to be spaced apart from the utility vehicle propeller shaft by less than 15 cm, less than 10 cm or less than 5 cm.

3. Chassis (F) according to one of the preceding claims, **characterized in that** the front wall (4) extends along the front wheelarch (R1).

4. Chassis (F) according to one of the preceding claims, **characterized in that** the rear wall (5) extends along the rear wheelarch (R2).

5. Chassis (F) according to one of the preceding claims, **characterized in that** the shape of at least one of the following is curved at least in sections: the front wheelarch (R1), the rear wheelarch (R2).

6. Chassis (F) according to one of the preceding claims, **characterized in that**
- the front wall (4) is concavely shaped, preferably so as to be adapted to a convex shape of the front wheelarch (R1), and/or
- the rear wall (5) is concavely shaped, preferably so as to be adapted to a convex shape of the rear wheelarch (R2).

7. Chassis (F) according to one of the preceding claims, **characterized in that** the side wall (3) has at least one subregion (3.2, 3.3) extending substantially parallel to the longitudinal direction (L) of the chassis (F), preferably a subregion (3.2) in front of the oblique side wall region (3.1) in the longitudinal direction (L) of the chassis (F) and/or a subregion (3.3) behind the oblique side wall region (3.1) in the longitudinal direction (L) of the chassis (F).

8. Chassis (F) according to one of the preceding claims, **characterized in that** the tank (2) has at least one passage opening (7) for a holder element (6) for holding the tank (2) on the longitudinal member (1).

9. Chassis (F) according to Claim 8, **characterized in that** the passage opening (7) extends through the tank (2), and/or a holder element (6) can be led via the passage opening (7) to the underside of the tank (2) in order to support the tank (2) at the underside.

10. Chassis (F) according to Claim 8 or 9, **characterized in that** the holder element (6) is of substantially L-shaped form.

11. Utility vehicle, in particular heavy goods vehicle or omnibus, having a chassis (F) according to one of the preceding claims.

## Revendications

1. Châssis (F) pour un véhicule utilitaire, avec au moins un longeron (1), qui présente une région partielle (1.1) s'étendant en oblique latéralement vers l'extérieur, et avec un réservoir (2) destiné à contenir du carburant ou un agent réducteur, dans lequel le réservoir (2) présente une paroi latérale (3) avec une région de paroi latérale oblique (3.1) et la région de paroi latérale oblique (3.1) s'étend le long de la région partielle oblique (1.1) du longeron (1), **caractérisé en ce que** le réservoir (2) est disposé derrière un passage de roue avant (R1) et/ou devant un passage de roue arrière (R2) et présente une paroi avant (4) et une paroi arrière (5), dans lequel la paroi avant (4) est au moins localement incurvée et est adaptée à la forme du passage de roue avant (R1) et/ou la paroi arrière (5) est au moins localement incurvée et est adaptée à la forme du passage de roue arrière (R2), dans lequel le réservoir (2) s'étend latéralement vers l'intérieur sous le longeron (1) en direction du milieu du châssis (F).

2. Châssis (F) selon la revendication 1, **caractérisé en ce que** le réservoir (2) s'étend vers un arbre de transmission du véhicule utilitaire, jusqu'à un point tel qu'il soit espacé de l'arbre de transmission du véhicule utilitaire de moins de 15 cm, de moins de 10 cm ou de moins de 5 cm.

3. Châssis (F) selon l'une quelconque des revendications précédentes, **caractérisé en ce que** la paroi avant (4) s'étend le long du passage de roue avant (R1).

4. Châssis (F) selon l'une quelconque des revendications précédentes, **caractérisé en ce que** la paroi arrière (5) s'étend le long du passage de roue arrière (R2).

5. Châssis (F) selon l'une quelconque des revendications précédentes, **caractérisé en ce que** la forme d'au moins un des éléments suivants est au moins localement incurvée: le passage de roue avant (R1), le passage de roue arrière (R2).

6. Châssis (F) selon l'une quelconque des revendications précédentes, **caractérisé en ce que**
- la paroi avant (4) est de forme concave, de préférence pour être adaptée à une forme convexe du passage de roue avant (R1), et/ou
- la paroi arrière (5) est de forme concave, de préférence pour être adaptée à une forme convexe du passage de roue arrière (R2).

7. Châssis (F) selon l'une quelconque des revendications précédentes, **caractérisé en ce que** la paroi latérale (3) présente au moins une région partielle (3.2, 3.3) s'étendant essentiellement parallèlement à la direction longitudinale (L) du châssis (F), de préférence une région partielle (3.2) située avant la partie de paroi latérale oblique (3.1) dans la direction longitudinale (L) du châssis (F) et/ou une région partielle (3.3) située après la région de paroi latérale oblique (3.1) dans la direction longitudinale (L) du châssis (F).

8. Châssis (F) selon l'une quelconque des revendications précédentes, **caractérisé en ce que** le réservoir (2) présente au moins une ouverture de passage (7) pour un élément de soutien (6) pour supporter le réservoir (2) sur le longeron (1).

9. Châssis (F) selon la revendication 8, **caractérisé en ce que** l'ouverture de passage (7) traverse le réservoir (2) et/ou un élément de soutien (6) peut être mené par l'ouverture de passage (7) jusqu'au côté inférieur du réservoir (2), afin de soutenir le réservoir (2) sur le côté inférieur.

10. Châssis (F) selon la revendication 8 ou 9, **caractérisé en ce que** l'élément de soutien (6) est réalisé essentiellement en forme de L.

11. Véhicule utilitaire, en particulier camion ou autobus, doté d'un châssis (F) selon l'une quelconque des revendications précédentes.
